# EUROPÄISCHE PATENTSCHRIFT

(11) **EP 0 454 218 B1**
(45) Veröffentlichungstag und Bekanntmachung des Hinweises auf die Patenterteilung: **05.07.1995**
(21) Anmeldenummer: 91200891.9
(22) Anmeldetag: 16.04.1991
(51) Int. Cl.: H04L 12/56

(54) **Zeitvielfachübermittlungssystem**
Time division multiplex transfer system
Système de transmission à division temporelle

(30) Priorität: 21.04.1990 DE 4012768
(43) Veröffentlichungstag der Anmeldung: 30.10.1991
(73) Patentinhaber: Philips Patentverwaltung GmbH, 22335 Hamburg (DE); Philips Electronics N.V., 5621 BA Eindhoven (NL)
(72) Erfinder: Keller, Hans-Georg, Dipl.-Ing., W-5100 Aachen (DE); Reumerman, Hans-Jürgen, Dipl.-Ing., W-5100 Aachen-Forst (DE)
(74) Vertreter: Peuckert, Hermann, Dipl.-Ing.

(56) Entgegenhaltungen:
- EP-A- 0 245 996
- EP-A- 0 362 723

## Beschreibung

Die Erfindung bezieht sich auf ein asynchrones Zeitvielfachübermittlungssystem, das ein Koppelelement enthält, welches von Zubringerleitungen gelieferte, für eine Abnehmerleitung bestimmte Zellen überträgt, das mit jeweils einer Zubringerleitung gekoppelte Zellenfilter, welche bei Zuordnung der in den Zellen enthaltenen Wegekennung zu der Abnehmerleitung die Zellen zur Speicherung in mit jedem Zellenfilter gekoppelte Kreuzungspuffer durchlassen, und das eine Zuweisungsschaltung zur Steuerung des Auslesevorgangs der Zellen aus den Kreuzungspuffern auf die Abnehmerleitung enthält.

Bei dem asynchronen Zeitvielfachübermittlungssystem werden Nutzinformationen, zum Beispiel Fernsprech-, Bild- oder Tonsignale, in Blöcken fester Länge über Anordnungen zur digitalen Signalverarbeitung gesendet. Als ein Block fester Länge wird eine Zelle bezeichnet, die eine vorbestimmte Anzahl von Bits in serieller Reihenfolge aufweist. Jede Zelle besteht aus einem Kopf und einem Informationsfeld. In dem Kopffeld ist u.a. die Wegekennung für die Zelle untergebracht. Unter einer Wegekennung ist eine Verbindungskennung oder eine Wegelenkungsinformation zu verstehen. In der Verbindungskennung ist die Angabe über das Ziel bzw. Teilziel der Nutzinformation enthalten. Die Wegelenkungsinformation wird innerhalb des Systems in bestimmten Übermittlungsanordnungen hinzugefügt und enthält eine Angabe über ein Teilziel innerhalb der Übermittlungsanordnung. Die Nutzinformation ist im Informationsfeld untergebracht.

Zellen sind aufeinanderfolgend bestimmten Zeitabschnitten (Zeitrahmen) zugeordnet. Die Dauer eines solchen Zeitabschnittes hängt von der zugrundegelegten Taktfrequenz der Übermittlungskomponente ab. Falls keine Nutzinformation vorhanden ist, werden in einem solchen Zeitrahmen Leerzellen übertragen, d.h. Zellen ohne Nutzinformationen.

Bei der Übertragung der Zellen zwischen Teilnehmern durchlaufen die Zellen Koppelfelder, in denen Wege durch Auswertung der Wegekennung hergestellt werden. Ein solches Koppelfeld setzt sich in der Regel aus mehreren Koppelfeldblöcken zusammen. Ein solcher Koppelfeldblock mit mehreren Zubringer- und Abnehmerleitungen besteht aus mehreren Koppelelementen. Ein Koppelelement ist mit mehreren Zubringerleitungen und einer Abnehmerleitung verbunden. In einem Koppelelement werden dabei Zellen von einer Zubringerleitung auf eine Abnehmerleitung gegeben. Bei Eintreffen von Zellen auf mehreren Zubringerleitungen während eines Zeitrahmens, die auf eine Abnehmerleitung zugreifen wollen, sind besondere Strategien zur Kopplung notwendig.

Aus der DE-OS 38 33 490 ist das oben genannte mit einem Koppelelement versehene Zeitvielfachübermittlungssystem bekannt. Hierbei werden die auf Zubringerleitungen eintreffenden Zellen in jeweils einem Kreuzungspuffer gespeichert, falls ein Zellenfilter Zellen zum Kreuzungspuffer durchläßt. Im Zellenfilter wird die Zelle in einem Register gespeichert und von einem Vergleicher anhand der Wegekennung der Zelle und der in einem Adressenspeicher abgelegten Adresse der Abnehmerleitung geprüft, ob die Zelle der Abnehmerleitung zugeordnet ist. Falls die Zelle auf die Abnehmerleitung gegeben werden soll, wird sie im Kreuzungspuffer gespeichert.

Zellen, die nicht zu dieser Abnehmerleitung gehören, werden in weiteren Koppelelementen überprüft. Die Kreuzungspuffer liefern, falls sie zur Auslesung freigegeben werden, Zellen auf die Abnehmerleitung. Über die Auslesereihenfolge der Zellen entscheidet eine Zuweisungsschaltung, welche die Zellen in der Reihenfolge, in der sie eingelesen worden sind, zur Auslesung freigibt. Sind gleichzeitig mehrere Zellen eingetroffen, so werden diese nach einer vorbestimmten Reihenfolge ausgelesen. Die Zuweisungsschaltung enthält weitere Zwischenpuffer für jede Zubringerleitung, in welche die Ergebnisse über den Vergleich im Vergleicher abgelegt werden. Anhand dieser Information wird in der Zuweisungsschaltung über die Auslesereihenfolge der Zellen entschieden. Die Zuweisungsschaltung enthält eine Entscheiderschaltung, die über die Reihenfolge der Auslesung der Zellen entscheidet. Zur Steuerung der Auslesung sind noch jedem Kreuzungspuffer zugeordnete Steuerungselemente vorhanden, die mit der Entscheiderschaltung über jeweils zwei Steuerleitungen verbunden sind. Bei einer hohen Anzahl von Zubringerleitungen wächst ebenfalls die Zahl dieser Steuerleitungen. Bei einer Realisierung eines Koppelelementes auf einer integrierten Schaltung wird angestrebt, möglichst viele Zubringerleitungen mit dem Koppelelement zu verbinden. Die Anzahl der Steuerleitungen wirkt dabei als begrenzender Faktor.

Der Erfindung liegt die Aufgabe zugrunde, ein asynchrones Zeitvielfachübermittlungssystem, das ein Koppelelement enthält, mit einer anderen Zuweisungsschaltung zu schaffen.

Diese Aufgabe wird bei einem Zeitvielfachübermittlungssystem mit einem Koppelelement der eingangs genannten Art dadurch gelöst, daß die Zuweisungsschaltung eine Kette von hierarchisch strukturierten, jedem Kreuzungspuffer zugeordneten Zuweisungselementen mit jeweilseinem Steuerungspuffer enthält, daß jedes Zuweisungselement bei Speicherung einer Zelle im zugeordneten Kreuzungspuffer einen ersten Zustand im zugeordneten Steuerungspuffer und die hierarchisch niedrigeren Zuweisungselemente einen zweiten Zustand in den zugeordneten Steuerungspuffern speichern und daß in umgekehrter hierarchischer Reihenfolge jedes Zuweisungselement den zugeordneten Steuerungspuffer auswertet und bei Vorliegen eines ersten Zustandes den zugeordneten Kreuzungspuffer zur Auslesung einer Zelle freigibt.

Bei diesem Zeitvielfachübermittlungssystem mit einem Koppelelement wird nach Lieferung einer Zelle, die auf die Abnehmerleitung gegeben werden soll, diese Zelle in den zugeordneten Kreuzungspuffer eingelesen. In dem jedem Kreuzungspuffer zugeordneten Zuweisungselement, das Teil einer Zuweisungsschaltung ist, wird ein erster Zustand erzeugt, der in ein in dem Zuweisungselement befindliches Steuerungspuffer eingelesen wird. Falls keine Zelle für die Abnehmerleitung eingetroffen ist, wird nichts gespeichert. Das Zuweisungselement, welches die Ankunft einer Zelle festgestellt hat, meldet das an ein weiteres Zuweisungselement. Diese Meldung erfolgt an das hierarchisch niedrigere Zuweisungselement, das daraufhin einen zweiten Zustand erzeugt, der in seinem Steuerungspuffer abgespeichert wird. Diese Meldung von der Ankunft einer Zelle wird bis zum hierarchisch niedrigsten Zuweisungselement durchgereicht. Jedes hierarchisch niedrigere Element erzeugt dabei einen zweiten Zustand, der im zugeordneten Steuerungspuffer abgespeichert wird. Falls gleichzeitig in ein weiteres Kreuzungspuffer eine Zelle eingelesen worden ist, wird von der zugeordneten Zuweisungsschaltung auch ein erster Zustand für das zugeordnete Steuerungstuffer und eine Meldung für die hierarchisch niedrigeren Zuweisungselemente erzeugt. Hierbei durchläuft zuerst die Meldung des hierarchisch niedrigeren Zuweisungselementes die Kette der niedrigeren Zuweisungselemente und in einem zeitlichen Abstand durchläuft die Meldung des höheren Zuweisungselementes dieselbe Kette von niedrigeren Zuweisungselementen, da vorher andere hierarchisch höhere Zuweisungselemente durchlaufen worden sind. In diesem Fall werden zumindest im Steuerungspuffer des niedrigsten Zuweisungselementes zwei zweite Zustände während eines Zeitrahmens gespeichert.

Der Auslesevorgang einer Zelle verläuft in umgekehrter Richtung. Zuerst wertet das hierarchisch niedrigste Zuweisungselement den von seinem Steuerungspuffer gelieferten Zustand aus. Von einem Steuerungpuffer wird dabei das zuerst ausgelesen, was zuerst eingelesen worden ist. Stellt die Zuweisungsschaltung fest, daß ein zweiter Zustand vorliegt, wertet das hierarchisch höhere Zuweisungselement den gelieferten Zustand seines Steuerungspuffers aus. Dies wird fortgesetzt bis ein Zuweisungselement in der zunehmenden Hierarchie der Zuweisungselemente einen ersten Zustand detektiert. Danach wird von der Zuweisungsschaltung der zugeordnete Kreuzungspuffer zur Auslesung einer Zelle freigegeben. Für die Auslesung der nächsten Zelle im nächsten Zeitrahmen wird wieder beim niedrigsten Zuweisungselement begonnen. Die Kette der Zuweisungselemente wird in hierarchisch zunehmender Reihenfolge durchgearbeitet, bis ein Zuweisungselement einen ersten Zustand auswertet. Der diesem Zuweisungselement zugeordnete Kreuzungspuffer gibt dann eine Zelle auf die Abnehmerleitung.

Mit dem erfindungsgemäßen Zeitvielfachübermittlungssystem mit einem Koppelelement wird die Anzahl der Leitungen zwischen Zuweisungsschaltung und zugeordneten Steuerschaltungen der Kreuzungspuffer gegenüber dem bekannten Koppelelement reduziert. Es sind unabhängig von der Anzahl der Kreuzungspuffer bzw. Zubringerleitungen jeweils zwei Leitungen für die Meldung, daß eine Zelle eingetroffen ist, und für die Steuerung des Auslesevorganges erforderlich.

Zur Steuerung des Auslesevorganges in dem Zeitvielfachübermittlungssystem mit einem Koppelelement ist vorgesehen, daß das Zuweisungselement mit der niedrigsten Hierarchie zur Auswertung des zugeordneten Steuerungspuffers von einer Zellenanforderungsschaltung mittels eines Freigabesignals zu Beginn eines Zeitrahmens freigegeben wird und daß dieses Freigabesignal in hierarchisch zunehmender Reihenfolge von Zuweisungselement zu Zuweisungselement weitergegeben wird, wenn nach der Auswertung des zugeordneten Steuerungspuffers ein zweiter Zustand festgestellt wird. Durch das Freigabesignal wird jeweils ein Zuweisungselement zur Auswertung des zugeordneten Steuerungspuffer veranlaßt.

Bei Ankunft einer Zelle wird ein erster Zustand in dem betreffenden Steuerungspuffer abgespeichert. In den Steuerungspuffern der niedrigeren Zuweisungselemente wird ein zweiter Zustand abgespeichert. Um diesen Speichervorgang steuern zu können ist vorgesehen, daß bis auf das hierarchisch niedrigste Zuweisungselement ein Zuweisungselement nach Speicherung eines ersten Zustandes in dem zugeordneten Steuerungspuffer ein Ankunftssignal erzeugt, welches in hierarchisch abnehmender Reihenfolge von Zuweisungselement zu Zuweisungselement weitergegeben wird, nach dessen Eintreffen in jedem Steuerungspuffer eines Zuweisungselementes ein zweiter Zustand gespeichert wird.

In einer Weiterbildung der Erfindung ist vorgesehen, daß jedes Zuweisungselement eine Einlesesteuerung, der von dem zugeordneten Zellenfilter mitgeteilt wird, ob eine für die Abnehmerleitung bestimmte Zelle eingetroffen ist, und die dann in den zugeordneten Steuerungspuffer einen ersten Zustand einliest und die anschließend nach Lieferung des Ankunftssignals von dem hierarchisch höheren Zuweisungselement einen zweiten Zustand in den Steuerungspuffer einliest, und eine Auslesesteuerung enthält, die mit dem Steuerungspuffer gekoppelt ist und die bei Vorliegen eines Freigabesignals und bei Vorliegen eines ersten Zustandes den zugeordneten Kreuzungspuffer zur Auslesung freigibt. Die Einlesesteuerung erzeugt also für den zugeordneten Steuerungspuffer einen ersten oder zweiten Zustand, der dann in dieses Steuerungspuffer eingelesen wird. Es können hierbei mehrere zweite Zustände in ein Steuerungspuffer eingelesen werden. Die Anzahl der während eines Zeitrahmens in einen Steuerungspuffer eingelesenen zweiten Zustände hängt ab von der Anzahl der gelieferten Zellen in den hierarchisch höheren Zuweisungselementen. Die Auslesesteuerung gibt das zugeordnete Kreuzungspuffer zur Auslesung einer Zelle auf die Abnehmerleitung frei, wenn einerseits ein Freigabesignal und andererseits ein erster Zustand vom zugeordneten Kreuzungspuffer vorliegt.

Des weiteren ist vorgesehen, daß bis auf die Einlesesteuerung des hierarchisch niedrigsten Zuweisungselementes jede Einlesesteuerung eines Zuweisungselementes ein Ankunftssignal bei Speicherung einer Zelle im zugeordneten Kreuzungspuffer erzeugt und daß die Einlesesteuerungen der hierarchisch niedrigeren Zuweisungselemente das Ankunftssignal nach Auswertung weitergeben.

Erhält eine Auslesesteuerung eines Zuweisungselementes ein Freigabesignal, gibt es dieses bis auf die Auslesesteuerung des hierarchisch höchsten Zuweisungselementes weiter, wenn nach Auswertung des ausgelesenen Zustandes des zuordneten Steuerungspuffers ein zweiter Zustand festgestellt wird.

Um einen Steuerungspuffer in einem Zuweisungselement so einfach wie möglich zu gestalten, ist vorgesehen, daß in einen Steuerungspuffer für den ersten Zustand eine binäre Eins und für den zweiten Zustand eine binäre Null eingelesen wird.

Ein Ausführungsbeispiel der Erfindung wird nachstehend anhand der Zeichnungen näher erläutert.

Es zeigen:
Fig. 1 ein Blockschaltbild eines asynchronen Zeitvielfachübermittlungssystems,
Fig. 2 einen aus mehreren Koppelelementen gebildeten Koppelfeldblock und
Fig. 3 ein Koppelelement mit einer Zuweisungsschaltung.

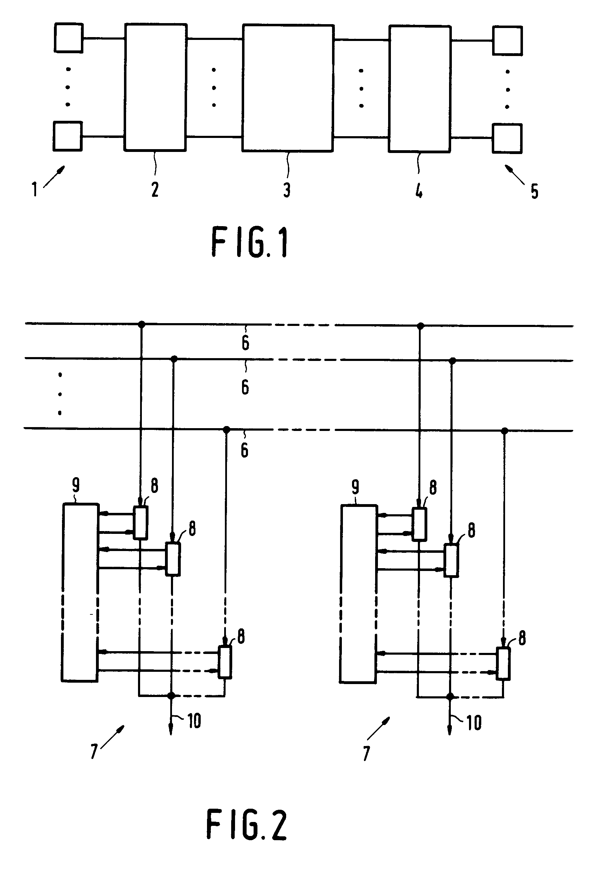

Das Prinzip eines asynchronen Zeitvielfachübermittlungssystems läßt sich mit dem in Fig. 1 dargestellten Blockschaltbild erläutern. Die Signale eines Endgerätes, z.B. Fernsprech-, Bild- oder Tonsignale, werden in einem Paketisierer segmentiert und mit einem Kopffeld, in dem eine Wegekennung vorhanden ist, versehen. Die Wegekennung beinhaltet die Angabe über das Ziel der Signale. Ein solches Endgerät und der Paketisierer bilden eine Teilnehmerendeinrichtung 1. Die Daten eines solchen Endgerätes werden dabei innerhalb aufeinanderfolgender Zeitintervalle (Zeitrahmen) in Form von Zellen übertragen. Die Dauer eines solchen Zeitrahmens hängt dabei von der zugrundegelegten Taktfrequenz einer Übermittlungskomponente ab. Solche Zellen bestehen aus dem schon oben erwähnten Kopffeld und der Nutzinformation. Sollen innerhalb eines Zeitrahmens keine Daten übertragen werden, so wird eine Leerzelle gebildet, d.h. eine Zelle, in der im Kopffeld angegeben ist, daß keine weitere Information folgt.

In dem in Fig. 1 dargestellten Blockschaltbild werden die Daten z.B. von 64 Teilnehmerendeinrichtungen 1 über 64 Leitungen mit jeweils einer Kapazität von 150 Mbit/s zu einer Anschlußgruppe 2 übertragen. In der Anschlußgruppe 2 werden die Daten zusammengefaßt und über eine geringere Anzahl von Leitungen mit einer höheren Kapazität übertragen. Beispielsweise können diese Daten über 16 Leitungen mit einer Kapazität von jeweils 600 Mbit/s geführt werden. In einem nachfolgenden Koppelfeld 3, das sich aus mehreren Koppelfeldblöcken und diese jeweils aus mehreren Koppelelementen zusammensetzen, findet durch Auswertung der Wegekennung eine Vermittlung der Daten statt, indem sie auf eine bestimmte Abnehmerleitung gegeben werden. Ein Koppelelement besteht hierbei aus einer Schaltungsanordnung, die an mehrere Zubringerleitungen und eine Abnehmerleitung angeschlossen ist. Die Schaltungsanordnung bzw. das Koppelelement können Daten, die auf die mit dem Koppelelement verbundene Abnehmerleitung weitergeleitet werden, ermitteln und die erforderlichen Wege innerhalb der Schaltungsanordnung dafür schaffen. Das Koppelfeld 3 ist wieder mit mehreren Leitungen, zum Beispiel 16 Leitungen, mit einer Kapazität von 600 Mbit/s mit einer Anschlußgruppe 4 verbunden. Die Anschlußgruppe 4 leitet die empfangenen Daten über Leitungen an Teilnehmerendeinrichtungen 5 weiter. Beispielsweise sind hierbei 64 Leitungen mit jeweils einer Kapazität von 150 Mbit/s vorgesehen. Ein solches System verarbeitet die Daten bidirektional, d.h. diese Daten werden außerdem noch von der Teilnehmerendeinrichtung 5 auf die Teilnehmerendeinrichtung 1 übertragen.

In Fig. 2 ist ein aus mehreren Koppelelementen gebildeter Koppelfeldblock, der Teil eines Koppelfeldes sein kann, dargestellt. Ein Koppelelement 7 ist hierbei mit mehreren Zubringerleitungen 6 verbunden. Jedes Koppelelement enthält mehrere Kreuzungspunktschaltungen 8, die jeweils mit einer Zubringerleitung 6 verbunden sind. In den Kreuzungspunktschaltungen 8 ist jeweils ein Kreuzungspuffer zur Speicherung von eintreffenden Zellen enthalten. Der Auslesevorgang aus den Kreuzungspuffern auf eine Abnehmerleitung 10 wird in einem Koppelelement von einer Zuweisungsschaltung 9 gesteuert. Die Zuweisungsschaltung 9 steuert die Auslesereihenfolge der Zellen aus den Kreuzungspunktschaltungen 8 auf die Abnehmerleitung 10 so, daß die Zellen in der gleichen Reihenfolge ausgelesen werden, wie sie eingelesen worden sind. Sind mehrere Zellen auf verschiedenen Zubringerleitungen gleichzeitig eingetroffen, so werden die Zellen in einer vorbestimmten Reihenfolge auf die Abnehmerleitung 10 gegeben.

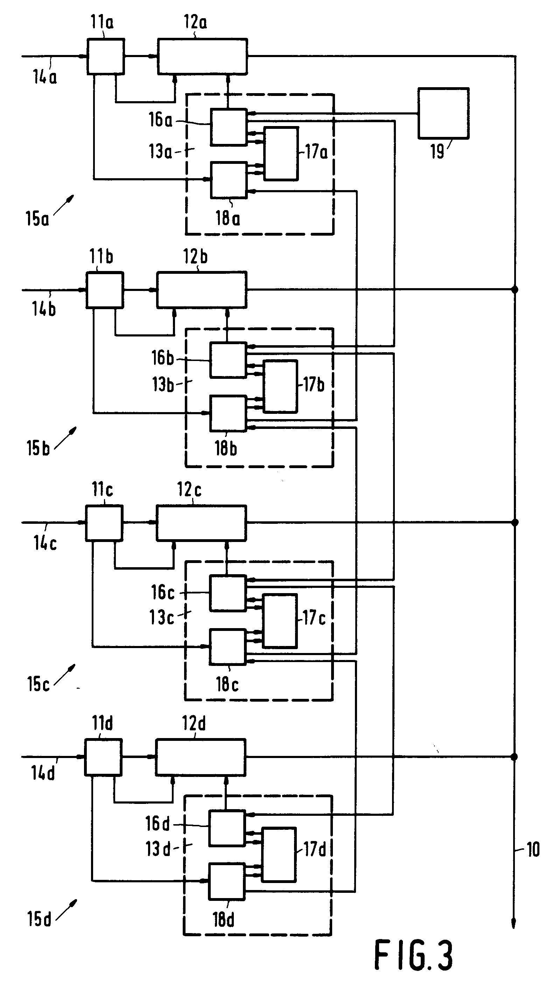

Ein Ausführungsbeispiel eines erfindungsgemäßen Koppelelementes ist in Fig. 3 dargestellt. Dieses Koppelelement enthält aus Vereinfachungsgründen vier Kreuzungspunktschaltungen 15a bis 15d. Ein solches Koppelelement kann jedoch aus weiteren Kreuzungspunktschaltungen bestehen. Jede Kreuzungspunktschaltung 15a bis 15d, die jeweils mit einer Zubringerleitung 14a bis 14d verbunden ist, enthält jeweils ein Zellenfilter 11a bis 11d, ein Kreuzungspuffer 12a bis 12d und ein Zuweisungselement 13a bis 13d. Der Eingang jedes Zellenfilters 11a bis 11d ist jeweils mit einer Zubringerleitung 14a bis 14d verbunden. Ein solches Zellenfilter 11a bis 11d überprüft, ob die eingetroffene Zelle auf die Abnehmerleitung 10 gegeben werden soll. Jedes Zellenfilter 11a bis 11d kann beispielsweise ein Register, einen Vergleicher und einen Speicher umfassen. In das Register wird eine Zelle eingelesen. Dem Vergleicher wird über eine Leitung die Wegekennung der im Register abgespeicherten Zelle und über eine weitere Leitung eine Information vom Speicher zugeführt. Der vergleicher ermittelt anhand der Wegekennung und der Information aus dem Speicher, ob die Wegekennung der Abnehmerleitung 10 zugeordnet ist.

Der Aufbau einer Kreuzungspunktschaltung 15a bis 15d sei anhand der Kreuzungspunktschaltung 15b erläutert. Falls die im Zellenfilter 11b eingetroffene Zelle in dem mit dem Zellenfilter 11b verbundenen Kreuzungspuffer 12b eingelesen werden soll, wird über eine Steuerleitung dem Kreuzungspuffer 12b ein Einlesesignal zugeführt, woraufhin über eine weitere Leitung die Zelle in den Kreuzungspuffer 12b eingelesen wird. Dem Kreuzungspuffer 12b ist ein Zuweisungselement 13b zugeordnet, das den Auslesevorgang über eine Steuerleitung aus dem Kreuzungspuffer 12b steuert. Der Ausgang des Kreuzungspuffers 12b ist mit der Abnehmerleitung 10 verbunden. Die anderen Kreuzungspunktschaltungen 15a, 15c und 15d sind gleich aufgebaut.

Ein Zuweisungselement 13a bis 13d enthält jeweils eine Auslesesteuerung 16a bis 16d, ein Steuerungspuffer 17a bis 17d und eine Einlesesteuerung 18a bis 18d. Der Aufbau eines Zuweisungselementes soll anhand des Zuweisungselementes 13b erläutert werden. Der Steuerungspuffer 17b ist mit der Einlesesteuerung 18b über eine Daten- und Steuerleitung und mit der Auslesesteuerung 16b über eine Daten- und Steuerleitung verbunden. Des weiteren ist die Einlesesteuerung 18b über eine Steuerleitung mit einem Zellenfilter 11b verbunden.

Es ist jeweils eine Verbindung zwischen der Einlesesteuerung 18b und der Einlesesteuerung 18a, eine Verbindung zwischen der Einlesesteuerung 18c und der Einlesesteuerung 18b und dann noch eine Verbindung zwischen der Einlesesteuerung 18d und der Einlesesteuerung 18c vorhanden. Eine Zellenanforderungsschaltung 19 ist mit der Auslesesteuerung 16a und diese mit der Auslesesteuerung 16b verbunden. Weiter besteht noch eine Verbindung zwischen den Auslesesteuerungen 16b und 16c und zwischen den Auslesesteuerungen 16c und 16d.

Die Zuweisungselemente 13a bis 13d bilden eine Zuweisungsschaltung 9. Die einzelnen Zuweisungselemente 13a bis 13d sind hierarchisch strukturiert. Das in der Hierarchie niedrigste Zuweisungselement ist das Zuweisungselement 13a, während das in der Hierarchie höchste Zuweisungselement das Zuweisungselement 13d ist. Trifft nun eine Zelle beispielsweise im Zellenfilter 11c ein, die der Abnehmerleitung 10 zugeordnet ist, wird von dem Zellenfilter 11c ein Signal erzeugt, wodurch der zugeordneten Einlesesteuerung 18c mitgeteilt wird, daß eine Zelle eingetroffen ist. Die Einlesesteuerung 18c erzeugt daraufhin eine binäre Eins, die in das Steuerungspuffer 17c eingelesen wird. Des weiteren erzeugt die Einlesesteuerung 18c ein Ankunftssignal, wodurch der Einlesesteuerung 18b des hierarchisch niedrigeren Zuweisungselementes 13b mitgeteilt wird, daß in dem Kreuzungspuffer 12c eine Zelle eingelesen worden ist. Daraufhin erzeugt die Einlesesteuerung 18b eine binäre Null, die in den zugeordneten Steuerungspuffer 17b eingelesen wird. Das Ankunftssignal wird von der Einlesesteuerung 18b weiter zur Einlesesteuerung 18a weitergereicht, die ebenfalls eine binäre Null erzeugt, die in den zugeordneten Steuerungspuffer 17a eingelesen wird.

Bei Eintreffen einer Zelle in einem Kreuzungspuffer 12a bis 12d wird also in den zugeordneten Steuerungspuffer 17a bis 17d eine binäre Eins von der zugeordneten Einlesesteuerung eingelesen und in den hierarchisch niedrigeren Zuweisungselementen 13a bis 13c eine binäre Null in die zugeordneten Steuerungspuffer 17a bis 17c eingelesen. Wenn eine Zelle, die auf die Abnehmerleitung 10 gelangen soll, auf der Zubringerleitung 14a eintrifft, wird nur eine binäre Eins für den Steuerungspuffer 17a erzeugt.

Das Auslesen einer Zelle aus einem Kreuzungspuffer 12a bis 12d wird folgendermaßen gesteuert: Zu Beginn eines Zeitrahmens erzeugt die Zellanforderungsschaltung 19 ein Freigabesignal, das der Auslesesteuerung 16a zugeführt wird. Die Auslesesteuerung 16a überprüft, welcher Zustand zuerst im Steuerungspuffer 17a anliegt. Stellt die Auslesesteuerung 16a fest, daß eine binäre Eins im Steuerungspuffer 17a gespeichert ist, wird ein Auslesesignal von der Auslesesteuerung 16a für das Kreuzungspuffer 12a erzeugt. Daraufhin wird eine im Kreuzungspuffer 12a gespeicherte Zelle auf die Abnehmerleitung 10 gegeben. Falls eine binäre Null im Steuerungspuffer 17a gespeichert ist, gibt die Auslesesteuerung 16a das Freigabesignal an die Auslesesteuerung 16b des hierarchisch höheren Zuweisungselementes 13b weiter. Hier wird ebenfalls überprüft, ob eine binäre Eins oder eine binäre Null im zugeordneten Steuerungspuffer 17b vorhanden ist. Ist eine binäre Eins vorhanden, so wird eine Zelle aus dem Kreuzungspuffer 12b durch ein Auslesesignal der Auslesesteuerung 16b ausgegeben. Falls eine binäre Null im Steuerungspuffer 17b vorhanden ist, wird das Freigabesignal an das Zuweisungselement 13c weitergereicht. Diese Kette wird durchgearbeitet bis zum letzten Zuweisungselement 13d. Die Auslesung der Zellen aus einem Steuerungspuffer 12a bis 12c muß dabei beispielsweise durch hier nicht näher dargestellte Verzögerungsglieder oder durch eine entsprechende Steuerung der Auslesung aus den Steuerungspuffern 12a bis 12c verzögert werden. Denn durch die Auswertung des Freigabesignals in den Auslesesteuerungen 16b bis 16d entstehen Verzögerungen, wodurch Überlagerungen von Zellen entstehen könnten, wenn keine Verzögerung bei der Auslesung vorgesehen wird.

Im folgenden wird an einem Beispiel erläutert, wie die Steuerungspuffer 17a bis 17d bei Eintreffen von Zellen auf verschiedenen Zubringerleitungen 14a bis 14d aufgefüllt werden. Trifft beispielsweise während eines ersten Zeitrahmens auf der Zubringerleitung 14a eine Zelle ein, die der Abnehmerleitung 10 zugeordnet ist, so wird nur von der Einlesesteuerung 18a eine binäre Eins erzeugt, die im Steuerungspuffer 17a abgespeichert wird. Es sei vorausgesetzt, daß während eines zweiten Zeitrahmens auf der Zubringerleitung 14d eine Zelle eintrifft, die im Kreuzungspuffer 12d gespeichert wird. Die Einlesesteuerung 18d erzeugt eine binäre Eins, die im Steuerungspuffer 17d abgespeichert wird. Des weiteren erzeugt die Einlesesteuerung 18d ein Ankunftssignal, das von der Einlesesteuerung 18c bis zur Einlesesteuerung 18a weitergereicht wird. Jede Einlesesteuerung 18a bis 18c erzeugt nach Eintreffen des Ankunftssignals eine binäre Null, die im zugeordneten Steuerungspuffer 17a bis 17c abgespeichert wird. Während eines dritten Zeitrahmens sollen nun auf den Zubringerleitungen 14a, 14b und 14d der Abnehmerleitung 10 zugeordnete Zellen eintreffen. In den Steuerungspuffern 17a, 17b und 17d wird daraufhin eine binäre Eins abgespeichert. Ein Ankunftssignal wird von der Einlesesteuerung 18b zur Einlesesteuerung 18a weitergereicht, die daraufhin eine binäre Null in das Steuerungspuffer 17a einliest. Des weiteren erzeugt die Einlesesteuerung 18d ein Ankunftssignal, wodurch jeweils eine binäre Null in die Steuerungspuffer 17a bis 17c eingelesen wird. Während eines vierten Zeitrahmens trifft beispielsweise eine Zelle auf der Zubringerleitung 14c ein. Im Steuerungspuffer 17c wird daraufhin eine binäre Eins und in die Steuerungspuffer 17a und 17b jeweils eine binäre Null eingelesen. Zuletzt soll vorausgesetzt werden, daß während eines fünften Zeitrahmens nur auf der Zubringerleitung 14a eine Zelle eintrifft. Von der Einlesesteuerung 18a wird daraufhin eine binäre Eins erzeugt, die in das Steuerungspuffer 17a eingelesen wird.

Falls bisher noch keine Zelle ausgelesen worden ist, sind im Steuerungspuffer 17a die binären Zustände "1010001", im Steuerungspuffer 17b die binären Zustände "0100", im Steuerungspuffer 17c die binären Zustände "001" und im Steuerungspuffer 17d die binären Zustände "11" gespeichert.

Beim Auslesen wird, nachdem die Zellanforderungsschaltung 19 ein Freigabesignal der Auslesesteuerung 16a zugeführt hat, überprüft, welcher Zustand zuerst im Steuerungspuffer 17a vorliegt. Die Auslesesteuerung 16a stellt fest, daß eine binäre Eins im Steuerungspuffer 17a gespeichert ist. Daraufhin wird die im ersten Zeitrahmen eingetroffene Zelle aus dem Kreuzungspuffer 12a auf die Abnehmerleitung 10 gegeben. Während des nächsten Zeitrahmens wird nach Aussendung des Freigabesignals von der Zellanforderungsschaltung 19 in der Auslesesteuerung 16a festgestellt, daß als nächstes im Steuerungspuffer 17a eine binäre Null anliegt. Daraufhin wird das Freigabesignal an die Auslesesteuerung 16b des hierarchisch höheren Zuweisungselementes geliefert. Auch hier wird festgestellt, daß eine binäre Null zuerst im Steuerungspuffer 17b gespeichert ist. Dieselbe Feststellung wird von der Auslesesteuerung 16c getroffen, die daraufhin das Freigabesignal an die Auslesesteuerung 16d weiterreicht. Hier wird nun festgestellt, daß im Steuerungspuffer 17d eine binäre Eins vorliegt, woraufhin die im zweiten Zeitrahmen auf der Zubringerleitung 14d eingetroffene Zelle auf die Abnehmerleitung 10 gegeben wird. Während des nächsten Zeitrahmens wird von der Auslesesteuerung 16a festgestellt, daß eine binäre Eins als nächstes im Steuerungspuffer 17a anliegt, woraufhin die im dritten Zeitrahmen auf der Zubringerleitung 14a eintroffene Zelle auf die Abnehmerleitung 10 gegeben wird. Während des folgenden Zeitrahmens wird von der Auslesesteuerung 16a festgestellt, daß im Steuerungspuffer 17a als nächstes eine binäre Null anliegt und anschließend von der Auslesesteuerung 16b, daß in dem zugeordneten Steuerungspuffer 17b eine binäre Eins liegt und daß aus dem Kreuzungspuffer 12b die nächste Zelle ausgegeben wird. Im darauffolgenden Zeitrahmen wird von den jeweiligen Auslesesteuerungen 16a, 16b und 16c festgestellt, daß in ihren Steuerungspuffern 17a bis 17c jeweils eine binäre Null anliegt. Das Freigabesignal gelangt somit zur Auslesesteuerung 16d, die feststellt, daß in ihrem zugeordneten Steuerungspuffer 17d eine binäre Eins vorhanden ist. Daraufhin wird die im dritten Zeitrahmen auf der Zubringerleitung 14d eingetroffene Zelle auf die Abnehmerleitung 10 gegeben. Während der nächsten beiden Zeitrahmen werden dann noch die in den Kreuzungspuffern 12c und 12a gespeicherten Zellen auf die Abnehmerleitung 10 gegeben.

Es sei noch erwähnt, daß die in den Figuren dargestellten Leitungen aus Gründen der Übersichtlichtkeit teilweise in Form einer Leitung gezeichnet sind, obwohl sie häufiger aus mehreren parallelen Leitungen bestehen. Auch die für die Steuerung der einzelnen digitalen Schaltungselemente erforderlichen Taktleitungen und Generatoren sind nicht dargestellt.

## Patentansprüche

1. Asynchrones Zeitvielfachübermittlungssystem, das ein Koppelelement enthält, welches von Zubringerleitungen (14a bis 14d) gelieferte, für eine Abnehmerleitung (10) bestimmte, Zellen überträgt, das mit jeweils einer Zubringerleitung gekoppelte Zellenfilter (11a bis 11d), welche bei Zuordnung der in den Zellen enthaltenen Wegekennung zu der Abnehmerleitung die Zellen zur Speicherung in mit jedem Zellenfilter gekoppelte Kreuzungspuffer (12a bis 12d) durchlassen, und das eine Zuweisungsschaltung (9) zur Steuerung des Auslesevorgangs der Zellen aus den Kreuzungspuffern auf die Abnehmerleitung enthält,
dadurch gekennzeichnet,
daß die Zuweisungsschaltung (9) eine Kette von hierarchisch strukturierten, jedem Kreuzungspuffer (12a bis 12d) zugeordneten Zuweisungselementen (13a bis 13d) mit jeweils einem Steuerungspuffer (17a bis 17d) enthält, daß jedes Zuweisungselement bei Speicherung einer Zelle im zugeordneten Kreuzungspuffer einen ersten Zustand im zugeordneten Steuerungspuffer und die hierarchisch niedrigeren Zuweisungselemente einen zweiten Zustand in den zugeordneten Steuerungspuffern speichern und daß in umgekehrter hierarchischer Reihenfolge jedes Zuweisungselement den zugeordneten Steuerungspuffer auswertet und bei Vorliegen eines ersten Zustandes den zugeordneten Kreuzungspuffer zur Auslesung einer Zelle freigibt.

2. Zeitvielfachübermittlungssystem nach Anspruch 1,
dadurch gekennzeichnet,
daß das Zuweisungselement (13a) mit der niedrigsten Hierarchie zur Auswertung des zugeordneten Steuerungspuffers (17a) von einer Zellenanforderungsschaltung (19) mittels eines Freigabesignals zu Beginn eines Zeitrahmens freigegeben wird und daß dieses Freigabesignal in hierarchisch zunehmender Reihenfolge von Zuweisungselement zu Zuweisungselement (13b bis 13d) weitergegeben wird, wenn nach der Auswertung des zugeordneten Steuerungspuffers (17b bis 17d) ein zweiter Zustand festgestellt wird.

3. Zeitvielfachübermittlungssystem nach Anspruch 1 oder 2,
dadurch gekennzeichnet,
daß bis auf das hierarchisch niedrigste Zuweisungselement (13a) ein Zuweisungselement (13b bis 13d) nach Speicherung eines ersten Zustandes in dem zugeordneten Steuerungspuffer (17b bis 17d) ein Ankunftssignal erzeugt, welches in hierarchisch abnehmender Reihenfolge von Zuweisungselement zu Zuweisungselement (13a bis 13c) weitergegeben wird, nach dessen Eintreffen in jedem Steuerungspuffer eines Zuweisungselementes ein zweiter Zustand gespeichert wird.

4. Zeitvielfachübermittlungssystem nach Anpruch 2 und 3,
dadurch gekennzeichnet,
daß jedes Zuweisungselement (13a bis 13d)
- eine Einlesesteuerung (18a bis 18d), der von dem zugeordneten Zellenfilter (11a bis 11d) mitgeteilt wird, ob eine für die Abnehmerleitung (10) bestimmte Zelle eingetroffen ist, und die dann in den zugeordneten Steuerungspuffer (17a bis 17d) einen ersten Zustand einliest und die anschließend nach Lieferung des Ankunftssignals von dem hierarchisch höheren Zuweisungselement einen zweiten Zustand in den Steuerungspuffer einliest, und
- eine Auslesesteuerung (16a bis 16d) enthält, die mit dem Steuerungspuffer gekoppelt ist und die bei Vorliegen eines Freigabesignals und bei Vorliegen eines ersten Zustandes den zugeordneten Kreuzungspuffer zur Auslesung freigibt.

5. Zeitvielfachübermittlungssystem nach Anspruch 4,
dadurch gekennzeichnet,
daß bis auf die Einlesesteuerung (18a) des hierarchisch niedrigsten Zuweisungselementes (13a) jede Einlesesteuerung (16b bis 18d) eines Zuweisungselementes (13b bis 13d) ein Ankunftssignal bei Speicherung einer Zelle im zugeordneten Kreuzungspuffer (12b bis 12d) erzeugt und daß die Einlesesteuerungen der hierarchisch niedrigeren Zuweisungselemente das Ankunftssignal nach Auswertung weitergeben.

6. Zeitvielfachübermittlungssystem nach Anspruch 5,
dadurch gekennzeichnet,
daß bis auf die Auslesesteuerung (16d) des hierarchisch höchsten Zuweisungselementes (13d) jede Auslesesteuerung (16a bis 16c) eines Zuweisungselementes (13a bis 13c) das empfangene Freigabesignal weitergibt, wenn nach Auswertung des zugeordneten Steuerungspuffers (17a bis 17c) ein zweiter Zustand festgestellt wird.

7. Zeitvielfachübermittlungssystem nach einem der vorhergehenden Ansprüche,
dadurch gekennzeichnet,
daß in einen Steuerungspuffer (17a bis 17d) für den ersten Zustand eine binäre Eins und für den zweiten Zustand eine binäre Null eingelesen wird.

8. Koppelelement für ein asynchrones Zeitvielfachübermittlungssystem, welches von Zubringerleitungen (14a bis 14d) gelieferte, für eine Abnehmerleitung (10) bestimmte Zellen überträgt, das mit jeweils einer Zubringerleitung gekoppelte Zellenfilter (lla bis lld), welche bei Zuordnung der in den Zellen enthaltenen Wegekennung zu der Abnehmerleitung die Zellen zur Speicherung in mit jedem Zellenfilter gekoppelte Kreuzungspuffer (12a bis 12d) durchlassen, und das eine Zuweisungsschaltung (9) zur Steuerung des Auslesevorgangs der Zellen aus den Kreuzungspuffern auf die Abnehmerleitung enthält,
dadurch gekennzeichnet,
daß die Zuweisungsschaltung (9) eine Kette von hierarchisch strukturierten, jedem Kreuzungspuffer (12a bis 12d) zugeordneten Zuweisungselementen (13a bis 13d) mit jeweils einem Steuerungspuffer (17a bis 17d) enthält, daß jedes Zuweisungselement bei Speicherung einer Zelle im zugeordneten Kreuzungspuffer einen ersten Zustand im zugeordneten Steuerungspuffer und die hierarchisch niedrigeren Zuweisungselemente einen zweiten Zustand in den zugeordneten Steuerungspuffern speichern und daß in umgekehrter hierarchischer Reihenfolge jedes Zuweisungselement den zugeordneten Steuerungspuffer auswertet und bei Vorliegen eines ersten Zustandes den zugeordneten Kreuzungspuffer zur Auslesung einer Zelle freigibt.

## Claims

1. Asynchronous time-division multiplex transmission system comprising an interconnection element, which element transmits cells supplied by auxiliary lines (14a to 14d) and destined for a trunk line (10), which element includes cell filters (11a to 11d) coupled each to one auxiliary line, which filters pass the cells to be stored in intersection buffers (12a to 12d) coupled to each cell filter when the path identification contained in the cells is allocated to an auxiliary line, and which element includes an allocation circuit (9) for controlling the reading out of the cells from the intersection buffers onto the trunk line, characterized in that the allocation circuit (9) comprises a chain of hierarchically structured allocation elements (13a to 13d) associated each to an intersection buffer (12a to 12d) and having each a control buffer (17a to 17d), in that each allocation element stores a first status in the associated control buffer when a cell is stored in the associated intersection buffer and the hierarchically lower allocation elements store a second status in the associated control buffers, and in that in reverse hierarchical order each allocation element evaluates the associated control buffer and, when a first status presents itself, releases the associated intersection buffer for a cell to be read out.

2. Time-division multiplex transmission system as claimed in Claim 1, characterized in that the allocation element (13a) having the lowest hierarchical order is released for the evaluation of the associated control buffer (17a) by a cell request circuit (19) by means of a release signal at the beginning of a time frame and in that this release signal is passed on in hierarchically increasing order from one allocation element to the next (13b to 13d) when a second status is established after the associated control buffer (17b to 17d) has been evaluated.

3. Time-division multiplex transmission system as claimed in Claim 1 or 2, characterized in that except for the hierarchically lowest allocation element (13a) an allocation element (13b to 13d) generates an arrival signal after a first status has been stored in the associated control buffer (17b to 17d), which signal is passed on from one allocation element to the next (13a to 13c) in a hierarchically decreasing order, a second status being stored in each control buffer of an allocation element after the arrival of this signal.

4. Time-division multiplex transmission system as claimed in Claims 2 and 3, characterized in that each allocation element (13a to 13d) comprises - a write controller (18a to 18d) which is informed by the associated cell filter (lieu to 11d) whether a cell destined for the trunk line (10) has arrived and which then writes a first status into the associated control buffer (17a to 17d) and which, subsequently, after the signal arrives from the higher hierarchy allocation element, writes a second status into the control buffer, and comprises - a read controller (16a to 16d) which is coupled to the control buffer and which releases the associated control buffer to be read out in the case where a release signal and a first status occur.

5. Time-division multiplex transmission system as claimed in Claim 4, characterized in that except for the write controller (18a) of the allocation element (13a) having the lowest hierarchical order, each write controller (18b to 18d) of an allocation element (13b to 13d) generates an arrival signal when a cell is stored in the associated intersection buffer (12b to 12d) and in that the write controllers of the hierarchically lower allocation elements pass the arrival signal after evaluation.

6. Time-division multiplex transmission system as claimed in Claim 5, characterized in that except for the read controller (16d) of the hierarchically highest allocation element (13d) each read controller (16a to 16c) of an allocation element (13a to 13c) passes the received release signal, when a second status is established after the associated control buffer (17a to 17c) has been evaluated.

7. Time-division multiplex transmission system as claimed in one of the preceding Claims, characterized in that a binary "one" is written into a control buffer (17a to 17d) for the first status and a binary "zero" for the second status.

8. Interconnection element for an asynchronous time-division multiplex transmission system, which element transmits cells supplied by auxiliary lines (14a to 14d) and destined for a trunk line (10), which element includes cell filters (11a to 11d) coupled each to one auxiliary line, which filters pass the cells to be stored in intersection buffers (12a to 12d) coupled to each cell filter when the path identification contained in the cells is allocated to an auxiliary line, and which element includes an allocation circuit (9) for controlling the reading out of the cells from the intersection buffers onto the trunk line, characterized in that the allocation circuit (9) comprises a chain of hierarchically structured allocation elements (13a to 13d) associated each to an intersection buffer (12a to 12d) and having each a control buffer (17a to 17d), in that each allocation element stores a first status in the associated control buffer when a cell is stored in the associated intersection buffer and the hierarchically lower allocation elements store a second status in the associated control buffers, and in that in reverse hierarchical order each allocation element evaluates the associated control buffer and, when a first status presents itself, releases the associated intersection buffer for a cell to be read out.

## Revendications

1. Système de transmission à division temporelle asynchrone, qui contient un organe de connexion, qui transmet des cellules délivrées par des lignes d'arrivée (14a à 14d) et destinées à une ligne de départ (10), qui contient des filtres de cellules (11a à 11d) couplés respectivement à une ligne d'arrivée, qui, par affectation de l'indicatif de trajet contenu dans les cellules à la ligne de départ, laisse passer les cellules pour mémorisation dans des tampons de croisement (12a à 12d) couplés à chaque filtre de cellule, et qui contient un circuit d'affectation (9) pour commander l'opération de lecture des cellules provenant des tampons de croisement sur la ligne de départ, caractérisé en ce que le circuit d'affectation (9) contient une chaîne d'éléments d'affectation hiérarchiquement structurés (13a à 13d), affectés à chaque tampon de croisement (12a à 12d), avec leur propre tampon de commande (17a à 17d), que chaque élément d'affectation, lors du stockage d'une cellule dans le tampon de croisement qui lui est affecté, mémorise un premier état dans la tampon de commande qui lui est affecté et les éléments d'affectation hiérarchiquement inférieurs mémorisent un deuxième état dans les tampons de commande qui leur sont affectés, et que, dans la séquence hiérarchique inverse, chaque élément d'affectation évalue le tampon de commande affecté et, en présence d'un premier état, libère le tampon de croisement qui lui est affecté pour lire une cellule.

2. Système de transmission à division temporelle selon la revendication 1, caractérisé en ce que l'élément d'affectation (13a) de la hiérarchie la plus basse est libéré pour évaluation du tampon de commande (17a) affecté par un circuit de demande de cellules (19) à l'aide d'un signal de libération au début d'un cadre temporel et que ce signal de libération est transmis en séquence hiérarchiquement croissante d'un élément d'affectation à l'autre (13b à 13d) lorsqu'un deuxième état est établi après l'évaluation du tampon de commande affecté (17b à 17d).

3. Système de transmission à division temporelle selon la revendication 1 ou 2, caractérisé en ce qu'à l'exception de l'élément d'affectation hiérarchiquement le plus bas (13a), un élément d'affectation (13b à 13d) produit, après mémorisation d'un premier état dans le tampon de commande affecté (17b à 17d), un signal d'arrivée qui est transmis en séquence hiérarchiquement croissante d'un élément d'affectation à l'autre (13a à 13c), et, après son arrivée, un deuxième état est mémorisé dans chaque tampon de commande d'un élément d'affectation.

4. Système de transmission à division temporelle selon les revendications 2 et 3, caractérisé en ce que chaque élément d'affectation (13a à 13d) contient :
- une commande de mémorisation (18a à 18d) à laquelle le filtre de cellules affecté (11a à 11d) signale si une cellule destinée à la ligne de départ (10) est arrivée, et qui mémorise alors dans le tampon de commande (17a à 17d) affecté, un premier état, et qui, ensuite, après délivrance du signal d'arrivée par l'élément d'affectation hiérarchiquement supérieur, mémorise un deuxième état dans le tampon de commande, et
- une commande de lecture (16a à 16d), qui est couplée au tampon de commande et libère, pour lecture, le tampon de croisement affecté en présence d'un signal de libération et d'un premier état.

5. Système de transmission à division temporelle selon la revendication 4, caractérisé en ce qu'à l'exception de la commande de mémorisation (18a) de l'élément d'affectation hiérarchiquement le plus bas (13a), chaque commande de mémorisation (18b à 18d) d'un élément d'affectation (13b à 13d) produit un signal d'arrivée lors de la mémorisation d'une cellule dans le tampon de croisement affecté (12b à 12d) et que les commandes de mémorisation des éléments d'affectation hiérarchiquement inférieurs transmettent le signal d'arrivée après évaluation.

6. Système de transmission à division temporelle selon la revendication 5, caractérisé en ce que, à l'exception de la commande de lecture (16d) de l'élément d'affectation hiérarchiquement le plus élevé (13d), chaque commande de lecture (16a à 16c) d'un élément d'affectation (13a à 13c) transmet le signal de libération reçu lorsqu'un deuxième état est établi après évaluation du tampon de commande affecté (17a à 17c).

7. Système de transmission à division temporelle selon l'une quelconque des revendications précédentes, caractérisé en ce qu'un 1 binaire pour le premier état et un O binaire pour le deuxième état sont mémorisés dans un tampon de commande (17a à 17d).

8. Organe de connexion pour un système de transmission à division temporelle asynchrone, qui transmet des cellules délivrées par des lignes d'arrivée (14a à 14d) et destinées à une ligne de départ (10), qui contient des filtres de cellules (11a à 11d) couplés respectivement à une ligne d'arrivée, qui, par affectation de l'indicatif de trajet contenu dans les cellules à la ligne de départ, laisse passer les cellules pour mémorisation dans des tampons de croisement (12a à 12d) couplés à chaque filtre de cellules, et qui contient un circuit d'affectation (9) pour commander l'opération de lecture des cellules provenant des tampons de croisement sur la ligne de départ, caractérisé en ce que le circuit d'affectation (9) contient une chaîne d'éléments d'affectation hiérarchiquement structurés (13a à 13d), affectés à chaque tampon de croisement (12a à 12d), avec leur propre tampon de commande (17a à 17d), que chaque élément d'affectation, lors du stockage d'une cellule dans le tampon de croisement qui lui est affecté, mémorise un premier état dans le tampon de commande qui lui est affecté et les éléments d'affectation hiérarchiquement inférieurs mémorisent un deuxième état dans les tampons de commande qui leur sont affectés, et que, dans la séquence hiérarchique inverse, chaque élément d'affectation évalue le tampon de commande affecté et, en présence d'un premier état, libère le tampon de croisement qui lui est affecté pour lire une cellule.
